# EUROPEAN PATENT APPLICATION

(11) **EP 1 300 579 A2**
(43) Date of publication of application: **09.04.2003**
(21) Application number: 02022143.8
(22) Date of filing: 02.10.2002
(51) Int. Cl.: F02M 25/08, B60K 15/035

(54) **Fuel tank ventilation valve for internal combustion engines**

(30) Priority: 04.10.2001 JP 2001308200
(71) Applicant: Kyosan Denki Co., Ltd., Sashima-gun, Ibaraki-pref., 306-0206 (JP)
(72) Inventor: Muto, Nobuharu, c/o Kyosan Denki Co., Ltd., Sashima-gun, Ibaraki-pref., 306-0206 (JP); Tagami, Hiroya, c/o Kyosan Denki Co., Ltd., Sashima-gun, Ibaraki-pref., 306-0206 (JP)
(74) Representative: Winter, Brandl, Fürniss, Hübner, Röss, Kaiser, Polte Partnerschaft

(57) **Abstract**

In a vent valve structure including a cut valve (20) that shuts off the flow of fuel vapor and fuel liquid, a positive pressure adjustment valve (30) that opens when positive pressure is applied, and a negative pressure adjustment valve (40) that opens when negative pressure is applied, the negative pressure adjustment valve (40) is provided in a row arrangement with the cut valve (20) in a position linking a ventilating passage (6) and a fuel tank (2) so as to bypass the valve opening (22a) of the cut valve (20).

## Description

### BACKGROUND OF THE INVENTION

### 1. Field of the invention

The invention relates to a vent valve structure provided in a ventilation system that links a fuel tank and a canister. More specifically, the invention relates to a vent valve structure that has a cut valve that closes when the level of the fuel exceeds a predetermined level, and a positive pressure adjustment valve and a negative pressure adjustment valve that regulate the pressure inside the fuel tank to a constant level.

### 2. Description of the Related Art

In automobiles and the like, a fuel tank that stores fuel for supply to the engine combustion chamber is provided. The fuel inside this fuel tank vaporizes even at room temperature and, as the temperature rises, that amount of evaporation increases. If the fuel tank is in a closed state, its internal pressure rises, and conversely, if the temperature drops, its internal pressure declines and the inside of the tank exhibits a negative-pressure state. In either case, when the fuel tank is in a closed state, there is the danger that this will cause its shape to deform and, in the worst case, the fuel tank may rupture, and fuel leak out. Therefore, fuel tanks are provided with a ventilating passage to provide a link to the atmosphere.

Initially, the ventilating passage is set up to simply provide a link to the atmosphere, but problems such as atmospheric pollution have became obvious and regulations are applied against fuel discharged from fuel tanks, and, as a matter of course, fuel vapor. Therefore, a canister is arranged at the end of the ventilating passage and employed as a means for preventing discharge of fuel vapor to the atmosphere. However, when simply providing a link to a canister through a ventilating passage inside the fuel tank, the canister is in constant contact with fuel vapor, causing early deterioration of the canister, and its initial effect cannot be achieved. Therefore, a vent valve equipped with a positive pressure adjustment valve and a negative pressure adjustment valve that open when the fuel tank pressure is equal to or higher than, or equal to or lower than a predetermined level is provided to enable ventilation control over a long period. Furthermore, because the internal pressure adjusted in this way is naturally maintained in a range where fuel tank shape deformation does not occur, this means also serves to prevent that fuel tank shape deformation.

In addition, in fuel tanks mounted in automobiles and the like, when excess fuel is supplied into them, or when they are in a tilted state, such as when the automobile or the like is stopped or is running in a tilted position, for example on an inclined road, fuel inside the fuel tank flowing through the ventilating passage into the canister cause harmful effects such as early deterioration of the canister and, furthermore, leaks of fuel to the outside through the canister. To solve these problems, art was developed to provide a cut valve integrated with the aforementioned pressure adjustment valves in the aforementioned ventilating passage. An example of this related art is disclosed in Japanese Patent Laid-Open Publication No. 6-137226.

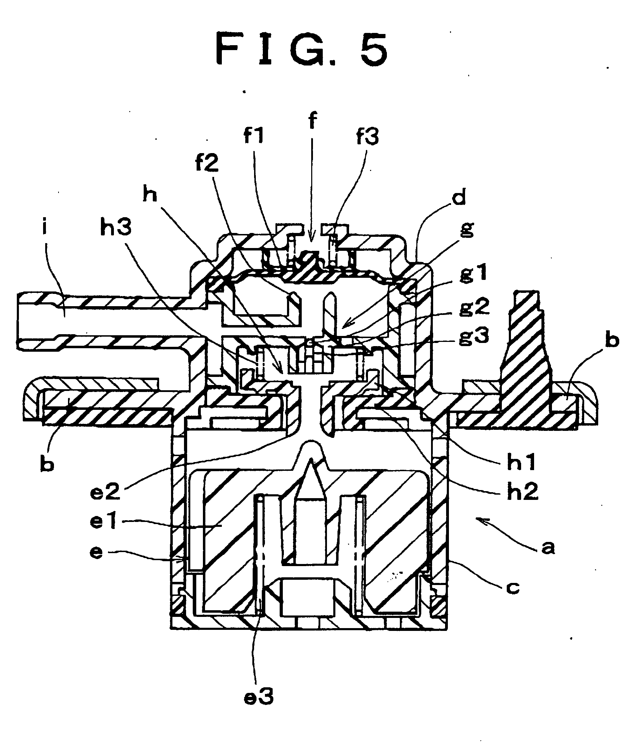

Hereafter, this vent valve structure will be explained based on FIG. 5. A vent valve (a) that is shown here is arranged on the upper portion of a fuel tank, and a canister is attached at the end of a ventilating passage (i). In the vent valve (a), a flange (b) that protrudes out to the left and right from the center of the vent valve (a) is sandwiched by a lower cylindrical body (c) on its lower portion and an upper cylindrical body (d) on its upper portion. Since the aforementioned flange (b) is arranged on the upper wall surface of the fuel tank, the aforementioned lower cylindrical body (c) is positioned inside the fuel tank and links with the fuel tank. The upper cylindrical body (d), is positioned outside the fuel tank' and links with the ventilating passage (i) that is connected at its other end to the canister.

A cut valve (e), including a float (e1) that also serves as a valve element, a valve seat (e2) and a spring (e3), is arranged in the aforementioned lower cylindrical body (c). The float (e1) moves up if excess fuel is supplied into the fuel tank, or if the automobile or the like is stopped in a tilted location such as an inclined road, or is running on that inclined road. The valve portion of the end of the float (e1) contacts against the valve seat (e2) and, because it shuts off the passage to the ventilating passage (i), there is no flow of fuel inside the tank to the outside, even if excess fuel is supplied into the fuel tank, or the like.

The aforementioned upper cylindrical body (d) exhibits a structure where each valve is arranged in series, so that a positive pressure adjustment valve (f), a negative pressure adjustment valve (g) and a safety valve (h), are arranged in that order from the top down. The positive pressure adjustment valve (f) includes a diaphragm (f1) that also serves as a valve element, a valve seat (f2) and a spring (f3). Normally, the diaphragm (f1) contacts against the valve seat (f2) using the spring force of the spring (f3), but if the pressure inside the fuel tank rises, reaching a positive pressure level equal to or higher than a predetermined value, the diaphragm (f1) moves up and expels the excess pressure in the fuel tank to the atmosphere through the ventilating passage (i), via the canister.

The negative pressure adjustment valve (g) includes a ball valve (g1) as a valve element, a seat valve (g2) and a spring (g3). Normally, the ball valve (g1) contacts against the valve seat (g2) using the spring force of the spring (g3), but if the temperature drops and the pressure inside the fuel tank decreases, reaching a negative pressure level equal to or lower than a predetermined value, the ball valve (g1) moves down and increases the negative pressure in the fuel tank by sucking in atmosphere from the outside via the negative pressure adjustment valve (g).

In addition, the safety valve (h), includes a valve element (h1) that has a substantially T-shape, a valve seat (h2) and a spring (h3). Further, the vertical portion of the valve element (h1) is hollow and its bottom portion also serves as the valve seat (e2) for the float (e1). Normally, the valve element (h1) contacts against the valve seat (h2) using the spring force of the spring (h3). However, in a case where excess fuel is supplied to the fuel tank or the like when the float (e1) has contacted against the valve seat (e2), creating a fuel shut-off state, if the pressure inside the fuel tank rises and attains a positive pressure equal to or higher than a predetermined value, the valve element (h1) moves up along with the float (e1), linking with the ventilating passage (i) inside the fuel tank, and expels that excess pressure to the atmosphere via the canister.

In this way, the vent valve in the related art has the typical effects of enabling long-term use of canisters through employing the pressure adjustment valves and the cut valve, preventing shape deformation of the fuel tank, and preventing outflow of fuel when excess fuel is supplied, or when the vehicle is stopped or running in a tilted state, and also has the typical effects of reducing the number of parts with an assembly structure that integrates all the valves and reducing production costs.

However, the vent valve in the related art has the following defects.

In a case where the float is in the closed position when excess fuel is supplied or the vehicle is stopped or running in a tilted state, if the fuel tank enters a negative pressure state due to the effects of a reduction in outside temperature or the like, harmful effects such as deformation of the fuel tank shape due to negative pressure may be generated because the insidc of the fuel tank is shut off from the atmosphere. In addition, although it is necessary for a separate relief valve to be provided somewhere in the fuel tank, for example, a filler cap, which is the lid of the fuel supply pipe, to eliminate these harmful effects, doing so increases the number of parts, and causes a definite increase in production costs.

In addition, as explained above, because the upper cylindrical body (d) that is positioned in the upper portion of the fuel tank consists of a structure where each valve is arranged in series, so that the positive pressure adjustment valve (f), the negative pressure adjustment valve (g) and the safety valve (h), are arranged in that order from the top down, this increases the height of the vent valve protruding from the top of the fuel tank. However, in most cases, fuel tanks that are mounted in automobiles and the like are not initially equipped with spaces exclusively for this. The valve is only arranged in the available space after other necessary parts have been arranged. Therefore, there are large limitations on arrangement space, and it is the trend to reduce the height of the valves and the like to be fitted to the fuel tank as much as possible. If the vent valve is tall, restrictions are placed on the locations where it can be used. This creates a new problem where it cannot be used, depending on the arrangement location of the fuel tank. In addition, when removing the fuel tank for fuel tank repair or the like, if the vent valve is tall, it may be an obstruction, and, in the worst case, the vent valve may strike another object, damaging it.

### SUMMARY OF THE INVENTION

In view of the foregoing problems, it is an object of the invention to eliminate the defects of conventional vent valves, while maintaining their functions. More particularly, the object of the invention is to provide a vent valve structure that prevents distortion of fuel tank shape caused by negative pressure when excess fuel has been supplied or when the vehicle is stopped or running, or the like, in a tilted state without providing a separate relief valve.

To accomplish the aforementioned object, a vent valve structure of the first embodiment of the invention is provided with a cut valve that shuts off/permits the flow of fuel vapor and fuel liquid, a first adjustment valve that opens when positive pressure is applied and a second adjustment valve that opens when negative pressure is applied. The aforementioned negative pressure adjustment valve is provided in a position linking a ventilating passage and a fuel tank so as to bypass a valve opening of the aforementioned cut valve.

According to a first embodiment, ventilation of fuel vapor and outflow of fuel liquid is reduced, and large fluctuations in pressure inside the fuel tank caused by temperature changes arc of course reduced. Deformation of the shape of the tank caused by excess negative pressure is also prevented when the cut valve is closed, in a case where excess fuel is supplied or the vehicle is stopped or running or the like, in a tilted state.

In addition, the aforementioned negative pressure adjustment valve may be provided outside or inside the aforementioned cut valve. Providing the negative pressure adjustment valve inside the cut valve reduces the width of the vent valve and makes the whole body compact.

In addition, a liquid trap portion may be provided on the atmosphere intake side of the aforementioned negative pressure adjustment valve. Even if fuel inside the fuel tank leaks into the ventilating passage, that fuel will be captured in the liquid trap portion and, as well as suppressing outflow to the canister and the outside, the fuel captured in the liquid trap portion is returned again to the fuel tank when the negative pressure adjustment valve is opened.

### BRIEF DESCRIPTION OF THE DRAWINGS

The foregoing and further objects. features and advantages of the invention will become apparent from the following description of preferred exemplary embodiments with reference to the accompanying drawings, wherein like numerals are used to represent like elements and wherein:
FIG. 1 is a schematic diagram of a fuel tank to which the vent valve of the invention is attached;
FIG. 2 is a cross section diagram that shows a vent valve structure of the invention;
FIG. 3 is a cross section diagram that shows another vent valve structure of the invention;
FIG. 4 is a cross section diagram showing yet another vent valve structure of the invention; and
FIG. 5 is a cross section diagram of a conventional vent valve structure.

### DETAILED DESCRIPTION OF THE PREFERRED EMBODIMENTS

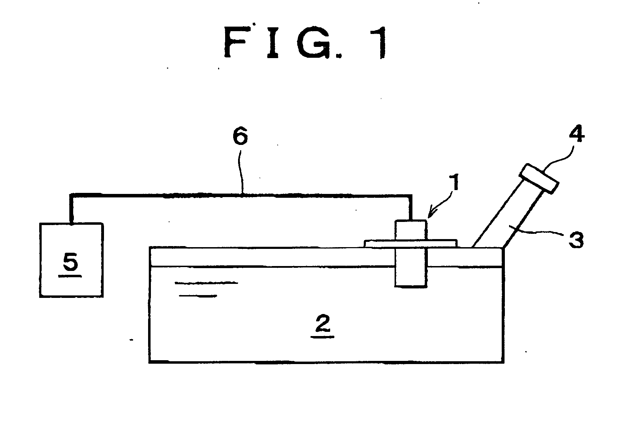

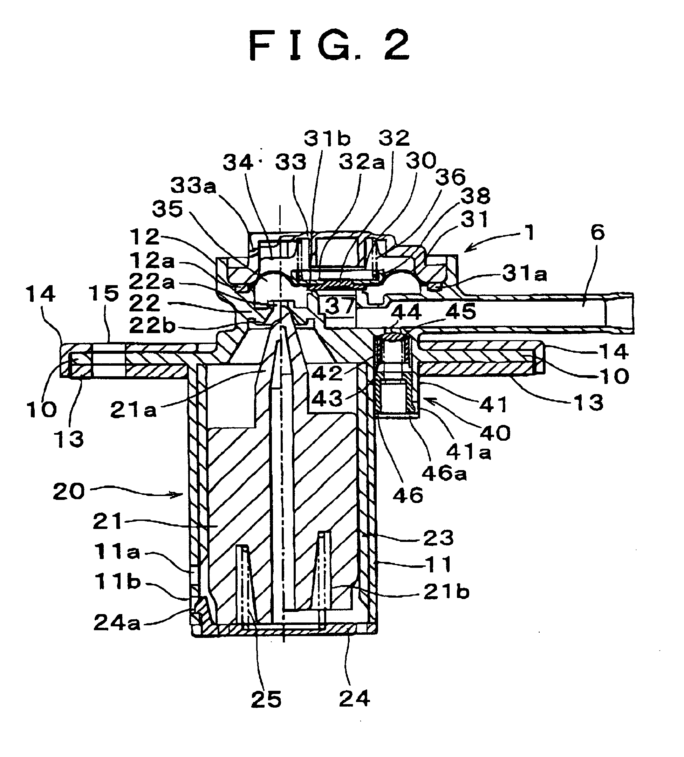

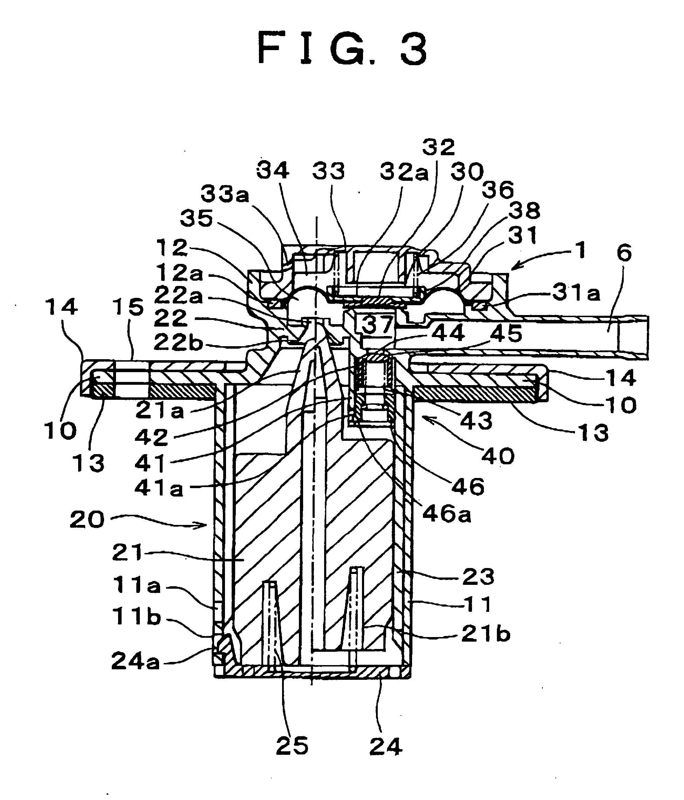

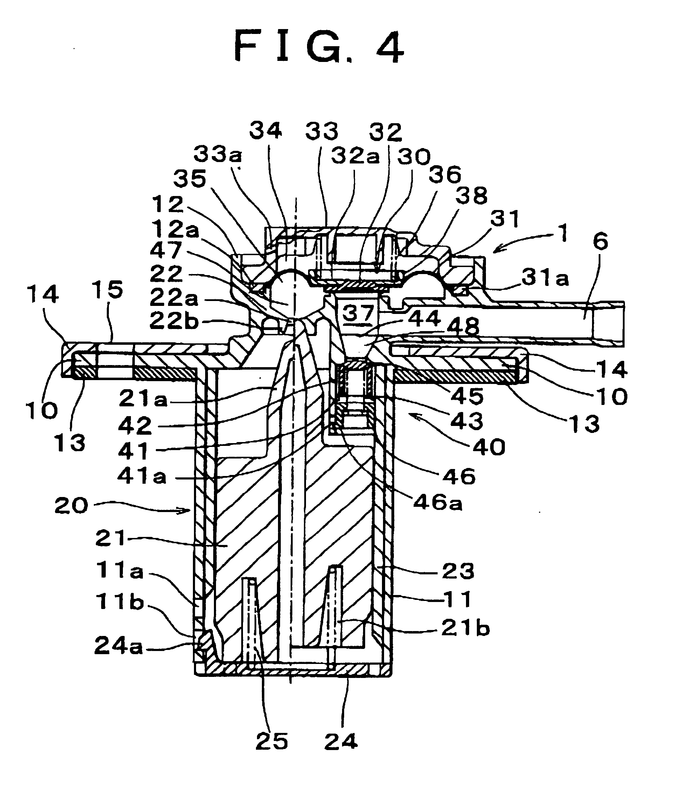

FIG. 1 is a schematic diagram of a fuel tank to which a vent valve is attached, FIG. 2 is a cross section diagram that shows a vent valve structure of the invention, and FIGS. 3 and 4 are cross section diagrams that show variations of this structure.

Hereafter, the first embodiment of the invention will be explained based on FIGS. 1 and 2. A fuel tank 2 is mounted in automobiles and the like. Fuel to be supplied to the engine is stored in this fuel tank 2. A vent valve 1 is provided on the upper portion of the fuel tank 2, and one end of a ventilating passage 6 is connected to this vent valve 1. The other end of the ventilating passage 6 is connected to a canister 5. A fuel supply pipe 3, closed off by a filler cap 4, is connected to the fuel tank 2, and, as necessary, fuel re-supply takes place from this fuel supply pipe 3.

Hereafter, a vent valve structure of the invention will be explained, based on FIG. 2. As FIG. 1 shows, the vent valve 1 is arranged on the upper portion of the fuel tank 2. It includes a flange 10 that protrudes out to the left and right from the center of the vent valve, a lower cylindrical body 11 that is formed on the lower part of the flange 10, and an upper cylindrical body 12 that is formed on the upper portion of the flange 10. The flange 10, the lower cylindrical body 11 and the upper cylindrical body 12, are integrated and made out of a resin, for example polyacetal (POM), or the like. The vent valve 1 is placed and held on an upper surface of the fuel tank 2 through a gasket 13 that is under the flange 10, and its upper portion is covered by a cover 14. It is strongly fixed to an upper portion of the fuel tank 2 by a screw (not shown) that is inserted and screwed together into a screw hole 15.

The fuel tank 2 may be made out of metal or resin. In addition, a lower surface of the aforementioned flange 10 is directly placed and held on the upper surface of the fuel tank 2, and may be fixed with a welding method, or the like.

Since the aforementioned flange 10 is arranged on the upper surface of the fuel tank 2, the aforementioned lower cylindrical body 11 is positioned inside the fuel tank 2 and links to the fuel tank 2, and the aforementioned upper cylindrical body 12 is positioned outside the fuel tank 2.

The lower portion of the aforementioned lower cylindrical body 11 exhibits a cylindrical form that opens at its lower portion. A cut valve 20 is provided in this lower open portion and the lower open portion is closed with a cap 24. The cut valve 20 includes a resin float 21, a valve seat 22b positioned above the float 21, and a spring 25 positioned below the float 21.

The float 21 is formed with the tapered valve element 21a on its upper end portion, and a circular spring storage slot 21b on its lower end portion. An outer peripheral surface of the float 21 is contacted against a plurality of guide ribs 23 that extend toward the center on an inner wall of the lower cylindrical body 11, and the float 21 is able to move up along the guide ribs 23 using buoyancy if fuel penetrates inside the lower cylindrical body 11. Of course, a gap between the outer peripheral surface of the float 21 and the inner wall of the lower cylindrical body 11 is provided by just the thickness of the guide ribs 23, and fuel that has entered into the inner portion of the lower cylindrical body 11 through a link hole 11a that is provided in the lower portion of the peripheral wall of the lower cylindrical body 11, moves freely up and down inside the lower cylindrical body 11 through this gap.

Arrangement of the float 21 takes place as follows. The float 21 is inserted from the lower open portion of lower cylindrical body 11, and the spring 25 is stored inside spring storage slot 21b that is formed on a bottom surface of float 21. Then, the lower open end of the lower cylindrical body 11 is closed with the cap 24. A plurality of latch pieces 24a are set on an inside outer peripheral edge portion of the cap 24 and, when the cap 24 is pushed into the lower open portion of the lower cylindrical body 11, the latch pieces 24a fit into a plurality of latch slots 11b that are formed in the lower portion of the peripheral wall of the lower cylindrical body 11. Through this forcibly-fitting type fixing method, the cap 24 can be installed into the lower open portion of the lower cylindrical body 11 with a single touch, and can be securely fixed.

After storing the float 21 into the lower cylindrical body 11, the float 21 is subject to the upward force of the spring 25, but that force alone does not move it up. When fuel enters into the inner portion of the lower cylindrical body 11 through the link hole 11a, the float 21 is subject to buoyancy and moves instantly up.

A valve opening 22a is provided on a compartment wall 22 that provides a boundary between the lower cylindrical body 11 and the aforementioned upper cylindrical body 12. The tapered valve seat 22b is formed on the lower cylindrical body 11 side of the valve opening 22a. The float 21 moves up when fuel enters into the inside of the lower cylindrical body 11. The tapered valve element 21a that is formed on the upper end portion of the float 21, fits tightly into the tapered valve seat 22b, shutting off the flow of fuel from the lower cylindrical body 11 to the upper cylindrical body 12. In FIG. 2, a dashed line has been drawn vertically through the center of the float 21, with the left and right portions of the float 21 deviating vertically from each other. On the right side of the central vertical line, the float 21 is shown moved up with the valve opening 22a in a closed state. On the left side, the float 21 is shown moved down with the valve opening 22a in an open state.

The float 21 moves up when excess fuel is supplied into the fuel tank, or if the automobile is stopped in a tilted location such as an inclined road, is running on that inclined road, or if the automobile has overturned. Because the valve element 21a on the end of the float 21 contacts against the valve scat 22b, shutting off the route to the ventilating passage 6, it can prevent the harmful effect of fuel in the fuel tank 2 flowing out.

The upper portion of the aforementioned upper cylindrical body 12 exhibits a cylindrical form that opens at its upper portion. A positive pressure adjustment valve 30, that corresponds to the first adjustment valve is provided inside this upper open portion, and the upper open portion is closed with a cap 33. The positive pressure adjustment valve 30 includes a diaphragm 31, a valve seat 38 positioned below the diaphragm 31, and a spring 36 that is positioned below the diaphragm 31, and the like.

The diaphragm 31 is a circular sheet with a hole in its center. A valve element 32 has a circular and flat-plane form, and is formed out of rubber. A holding latch 32a, that holds an inner peripheral end portion 31b of the diaphragm central hole, is provided on the upper portion of this valve clement 32. The valve element 32 and the holding latch 32a fit together through the central hole of diaphragm 31, and the valve element 32 and the holding latch 32a are fixed to the diaphragm 31.

Arrangement of the diaphragm 31 takes place as follows. With the valve element 32 and the holding latch 32a held to the diaphragm 31, an outer peripheral end portion 31a of the diaphragm 31 is placed and held on a stepped portion 12a that is formed inside the upper cylindrical body 12. In that state it is closed by the cap 33, which is arranged above it. The outer peripheral end portion 31a of the diaphragm 31 is held and fixed by the outer peripheral end portion of the cap 33 and the stepped portion 12a that is inside the upper cylindrical body 12. On closing the upper cylindrical body 12 with the cap 33, because the spring 36 is arranged between the cap 33 and the holding latch 32a, the diaphragm 31 is subject to a downward force when the cap 33 has been fitted and the diaphragm 31 fixed. As a result, the valve element 32 that is positioned in the central lower portion of the diaphragm 31 is tightly contacted against the valve seat 38. For fixing the cap 33, the same forcibly-fitting method as employed when attaching the cap 24 of the cut valve 20 to the lower end portion of the lower cylindrical body 11 is carried out, but other fixing methods, such as ultrasonic welding may be employed.

When the diaphragm 31 is provided, an atmosphere chamber 34 above the diaphragm 31 and a diaphragm chamber 35 below the diaphragm 31 are both formed. Normally, atmosphere is introduced into the atmosphere chamber 34 via an atmosphere opening 33a that is provided on a side wall of the cap 33 so as to be tilted downward. The aforementioned diaphragm chamber 35 links to the inside of the fuel tank 2 via the aforementioned valve opening 22a, and also links to the aforementioned ventilating passage 6 by opening the valve clement 32.

In addition, a linking opening 37 is formed on the aforementioned boundary wall 22, linking with the aforementioned ventilating passage 6, in parallel to the valve opening 22a and opposite the valve element 32. Also, the linking opening 37 is provided with the valve seat 38 whose end protrudes slightly upward. In a state where the positive pressure inside the fuel tank 2 is not applied to the diaphragm chamber 35, the aforementioned rubber valve element 32 contacts tightly against the valve seat 38, shutting off the fuel tank 2 and the ventilating passage 6 more securely.

Through the structure of this positive pressure adjustment valve 30, if the pressure inside the fuel tank 2 rises to a value equal to or higher than a predetermined value, the diaphragm 31 is pushed upward and, because the valve element 32 opens the linking opening 37 at the same time, the excess pressure in the fuel tank 2 is expelled into the atmosphere via the canister through the ventilating passage 6. Therefore, the harmful effect of shape deformation of the fuel tank 2 due to abnormal positive pressure inside the fuel tank 2 can be prevented.

A negative adjustment valve 40 that corresponds to the second adjustment valve is integrally provided on the upper side surface of the lower cylindrical body 11. In other words, the negative pressure adjustment valve 40 is arranged outside the lower cylindrical body 11. The negative pressure adjustment valve 40 includes a hollow pipe portion 41 that forms an outer shell, a valve element 42, a spring 43 and a spring receiver 46. The upper part of the pipe portion 41 links to the ventilating passage 6 through an opening 44, and its lower part opens into the inside of the fuel tank 2.

In the inside of the pipe portion 41, the valve element 42, the spring 43 and the spring receiver 46 are arranged in this order from the top down. The valve element 42 consists of a cylinder with an opening on its lower portion, and the valve portion on its end can move to contact against a valve seat 45 that is provided on the opening 44 that links to the ventilating passage 6. In addition, the cylindrical spring receiver 46 that is positioned on its lower end, is inserted into the pipe portion 41 from the bottom. However, on insertion, the cylindrical spring receiver 46 is pushed in while it holds the spring 43 that is between it and the valve element 42. Therefore, it is pushed in against the spring force of the spring 43.

A plurality of latches 46a are provided on the outer peripheral lower end portion of the spring receiver 46. The same number of latch slots 41a are provided on the lower end portion of the aforementioned pipe portion 41. The spring receiver 46 is pushed into the inside of the pipe portion 41 against the spring force of the spring 43, and becomes fixed inside the pipe portion 41 by fitting the latches 46a of the spring receiver 46 to the latch slots 41a of the pipe portion 41.

Through the structure of this negative pressure adjustment valve 40, if the pressure inside the fuel tank 2 falls to a value equal to or lower than a predetermined value, that negative pressure operates on the inner surface of the valve element 42 and pushes the valve element 42 downward. Then, the opening 44 links with the inside of the fuel tank 2 and atmosphere is introduced inside the fuel tank 2 through the ventilating passage 6. Therefore, the harmful effect of shape deformation of the fuel tank 2 due to abnormal negative pressure inside the fuel tank 2 can be prevented.

Because the negative pressure adjustment valve 40 is provided in a row arrangement with the cut valve 20, in a case where the cut valve 20 operates when the valve opening 22a that links to the diaphragm chamber 35 is in a closed state, even if the inside of the fuel tank 2 has entered a negative pressure state, the negative pressure adjustment valve operate. In addition, because atmosphere can be introduced into the fuel tank 2 through the ventilating passage 6, the harmful effect of shape deformation of the fuel tank 2 due to abnormal negative pressure inside the fuel tank 2 can be prevented.

Furthermore, because a structure is employed where the negative pressure adjustment valve 40 is provided in a row arrangement with the cut valve 20, the height of the vent valve 1 protruding upward from the upper end portion of the fuel tank 2 is definitely reduced.

Hereafter, a vent valve according to a second embodiment of the invention will be explained using FIG. 3.

In the vent valve according to the first embodiment, the negative pressure adjustment valve 40 is provided outside, on the upper portion of the side wall of the lower cylindrical body 11. In the second embodiment, a negative pressure adjustment valve is provided inside, on an inner portion of a side wall of the lower cylindrical body 11. According to the second embodiment, the width of the lateral direction of the vent valve (the direction of a flange 10) can be reduced to a minimum and the length of the flange 10 on the side where the negative pressure valve 40 is provided can be sufficiently secured. As a result, the contact surface with a fuel tank 2 can be adequately secured.

Compared with the first embodiment as shown in FIG. 2, the second embodiment differs only in the arrangement position of the negative pressure valve 40, and has the same structure in all other aspects.

Therefore, the description of the same portion as in the vent valve shown in FIG. 2 will be omitted, though a portion of the negative pressure valve 40 will be described.

In other words, the negative pressure adjustment valve 40 is not formed on the upper outer side surface of the aforementioned lower cylindrical body 11. It is integrally provided on the upper inner side surface of the lower cylindrical body 11 that is, it is formed inside the lower cylindrical body 11. The negative pressure adjustment valve 40 includes a hollow pipe portion 41 that forms an outer shell, a valve element 42, a spring 43 and a spring receiver 46. The upper part of the pipe portion 41 links to the ventilating passage 6 through an opening 44, and its lower part opens into the inside of the lower cylindrical body 11.

In the inside of the pipe portion 41, the valve element 42, the spring 43 and the spring receiver 46 are arranged in this order from the top down. The valve element 42 consists of a cylinder with an opening on its lower portion, and the valve portion on its end can move to contact against a valve seat 45 that is provided on the opening 44 that links to the ventilating passage 6. In addition, the cylindrical spring receiver 46 that is positioned on its lower end, is inserted into the pipe portion 41 from the bottom. However, on insertion, the cylindrical spring receiver 46 is pushed in whilst it holds the spring 43, which is between it and the valve element 42. Therefore, it is pushed in against the spring force of the spring 43.

A plurality of latches 46a are provided on the outer peripheral lower end portion of the spring receiver 46. The same number of latch slots 41a are provided on the lower end portion of the aforementioned pipe portion 41. The spring receiver 46 is pushed into the inside of the pipe portion 41 against the spring force of the spring 43, and becomes fixed inside the pipe portion 41 by fitting the latches of the spring receiver 46 to the latch slots 41a of the pipe portion 41.

In this second embodiment, the length of the negative pressure adjustment valve 40 or the shape of a float 21 is determined so as not to interfere with the movement of the float 21 when the float 21 moves up. In addition, assembly of the negative pressure adjustment valve 40 now takes place before the assembly of a cut valve 20.

In comparison with the embodiment shown in FIG. 2, the structure of this negative pressure adjustment valve 40 is able to reduce the size of the lateral direction of a vent valve 1 to a minimum. As a result, its height is reduced as much as possible, and accordingly, the entire size can be made compact.

Hereafter, a vent valve according to a third embodiment of the invention will be explained using FIG. 4.

In the first and second embodiments, within the operating time of the cut valve 20, there is no outflow of fuel to the ventilating passage 6 when the cut valve 20 operates. However, if, for whatever reason, the cut valve 20 operates more slowly than the fuel outflow, a portion of the fuel will flow out into the ventilating passage 6, causing deterioration of the canister, and causing atmospheric pollution through the fuel being exhausted to the outside.

The third embodiment suppresses the above flaw. Compared with the vent valve shown in FIG. 3, the vent valve shown in FIG. 4 differs only in the form of an opening 44 on an upper portion of a negative adjustment valve 40, and has the same structure in all other aspects. Therefore, the description of the same portion as in the vent valve shown in FIG. 3 will be omitted, though a portion of the negative pressure valve 40 will be described.

In other words, the negative pressure adjustment valve 40 is not formed on the upper outer side surface of the aforementioned lower cylindrical body 11. It is integrally provided on the upper inner side surface of the lower cylindrical body 11 that is, it is formed inside the lower cylindrical body 11. The negative pressure adjustment valve 40 includes a hollow pipe portion 41 that forms an outer shell, a valve element 42, a spring 43 and a spring receiver 46. The upper part of the pipe portion 41 links to the ventilating passage 6 through the opening 44, and its lower part opens into the inside of the lower cylindrical body 11.

In the inside of the pipe portion 41, the valve element 42, the spring 43 and the spring receiver 46 are arranged in this order from the top down, and a liquid trap chamber 48 is formed between the upper end of the pipe portion 41 and the opening 44, which opens onto the ventilating passage 6. This liquid trap chamber 48 has a tapered form to allow fuel that has flowed out of a fuel tank 2 to enter it more easily.

The valve element 42 consists of a cylinder with an opening on its lower portion, and the valve portion on its end can move to contact against a valve seat 45 that is provided on the bottom portion of the liquid trap chamber 48. Furthermore, the cylindrical spring receiver 46 that is positioned on its lower end is inserted into the pipe portion 41 from the bottom. However, on insertion, the cylindrical spring receiver 46 is pushed in whilst it holds the spring 43, which is between it and the valve element 42. Therefore, it is pushed in against the spring force of the spring 43.

A plurality of latches 46a are provided on the outer peripheral lower end portion of the spring receiver 46. The same number of latch slots 41a are provided on the lower end portion of the aforementioned pipe portion 41. The spring receiver 46 is pushed into the inside of the pipe portion 41 against the spring force of the spring 43, and is fixed inside the pipe portion 41 by fitting the latches of the spring receiver 46 to the latch slots 41a of the pipe portion 41.

In this third embodiment, the aforementioned liquid trap chamber 48 and an identically tapered liquid trap chamber 47 are provided inside a diaphragm chamber 35 that is above a valve opening 22a positioned above a valve element 21a, which is integrated with a float 21. By providing this kind of two-stage liquid trap chamber, the danger of fuel outflow reaching as far as a canister 5 can be reduced. Although the fuel that flows into the liquid trap chambers 47 and 48 becomes trapped inside each chamber, it returns again to the fuel tank 2 when a cut valve 20 has opened, or when the valve element 42 has opened while the negative pressure adjustment valve 40 is operating.

The vent valve according to the third embodiment may be provided without the liquid trap chamber 47. In addition, the liquid trap chamber 48 may be applied to the vent valve according to the first embodiment or the second embodiment. In this case, it may be applied together with liquid trap chamber 47. Furthermore, each of the liquid trap chambers 47 and 48 may not have a tapered form. They may have a columnar form, or a form that possesses a stepped portion.

In addition, in this third embodiment, the length of the negative pressure adjustment valve 40 or the shape of the float 21 is determined so as not to interfere with the movement of the float 21 when the float 21 moves up. In addition, assembly of the negative pressure adjustment valve 40 now takes place before the assembly of the cut valve 20.

Owing to the structure of this negative pressure adjustment valve 40, in comparison with the embodiments shown in FIGS. 2 and 3, if fuel has flowed out into a ventilating passage 6, there are no harmful effects such as deterioration of a canister 5 or atmospheric pollution because that fuel is collected and stored by the liquid trap chamber 47 or the liquid trap chamber 48, and that fuel is also returned to inside the fuel tank 2.

The safety valve as shown in FIG. 5 has not been explicitly described in the embodiments of the invention. However, even in the embodiments of the invention, when the cut valve 20 is in operation and the valve opening 22a that links to the diaphragm chamber 35 is in a closed state, there is the possibility that deformation of the shape of the fuel tank 2 may occur if the inside of the fuel tank 2 enters a positive pressure state because both the cut valve 20 and the negative pressure valve 40 are closed. However, this problem can be solved by separately providing the safety valve as shown in FIG. 5.

The embodiments of the invention are not limited to the structure of each of the aforementioned embodiments. It is to be understood that appropriate design modifications can be made without departing from the true spirit of the invention.

In addition, in the aforementioned embodiments, in a structure including a cut valve that shuts off the flow of fuel vapor and fuel liquid, a positive pressure adjustment valve that opens when positive pressure is applied and a negative pressure adjustment valve that opens when negative pressure is applied, the aforementioned negative pressure adjustment valve is provided in a row arrangement with the aforementioned cut valve in a position linking the ventilating passage and the fuel tank so as to bypass the valve opening of the cut valve. Deformation of the shape of a fuel tank caused particularly by negative pressure inside the fuel tank can be prevented with this structure even if the cut valve is closed, when excess fuel has been supplied or the vehicle is stopped or running in a tilted state. Thus, there is no need for providing a separate relief valve. In addition, the vent valve can be provided with a more compact form because the height of the vent valve can also be reduced.

Furthermore, by providing the aforementioned negative pressure adjustment valve inside the cut valve, the width of the vent valve can be made smaller, and the whole body can be made more compact.

In addition, canister deterioration and exhaust of fuel to the outside causing atmospheric pollution can be prevented by providing a liquid trap portion on the atmosphere intake side of the aforementioned negative pressure adjustment valve. This is because, even if fuel inside the fuel tank leaks into the ventilating passage when excess fuel has been supplied or the vehicle is stopped or running in a tilted state, that fuel will be captured in the liquid trap portion. Furthermore, it is not necessary to provide a special recovery means because the fuel captured in the liquid trap portion is returned again to the fuel tank when the negative pressure adjustment valve is opened.

## Claims

1. A vent valve structure comprising a cut valve (20) which has a valve opening (22a), and which shuts off and permits fuel vapor and fuel liquid to flow from a fuel tank (2) to a ventilating passage (6), a first adjustment valve (30) that opens when positive pressure is applied, and a second adjustment valve (40) that opens when negative pressure is applied, the vent valve structure chacacteraxed in that:
the second adjustment valve (40) which is provided in a position linking the ventilating passage (6) and the fuel tank (2) so as to bypass the valve opening (22a) of the cut valve (20).

2. The vent valve structure according to Claim 1, **characterized in that**:
the cut valve (20) includes a housing (11) and a valve element (21) that is arranged inside the housing (11) so as to be able to move up and down, and
the second adjustment valve (40) is provided outside the housing (11) of the cut valve (20).

3. The vent valve structure according to Claim 2, **characterized in that**:
the second adjustment valve (40) is provided in a position directly linking the fuel tank (2) and the ventilating passage (6).

4. The vent valve structure according to any one of Claims 1 to 3, **characterized in that**:
the second adjustment valve (40) is provided in a row arrangement with the cut valve (20).

5. The vent valve structure according to Claim 1, **characterized in that**:
the cut valve (20), includes a housing (11) and a valve element (21) that is arranged inside the housing (11) so as to be able to move up and down, and
the second adjustment valve (40) is provided inside the housing (11) of the cut valve (20).

6. The vent valve structure according to Claim 5, **characterized in that**:
the second adjustment valve (40) is providcd in a position linking the inside of the housing (11) and the ventilating passage (6).

7. The vent valve structure according to any one of Claims 1 to 6, **characterized by** further comprising.
a liquid trap portion (48) provided on the atmosphere intake side of the second adjustment valve (40).
